# FASCICULE DE BREVET EUROPEEN

(11) **EP 1 650 125 B1**
(45) Date de publication et mention de la délivrance du brevet: **29.07.2009**
(21) Numéro de dépôt: 05292129.3
(22) Date de dépôt: 12.10.2005
(51) Int. Cl.: B63J 99/00, F17C 9/04

(54) **Système énergétique mettant en oeuvre du gaz naturel stocké sous forme liquide et des machines thermoélectriques**
Energie-System mit in Flüssigkeitsform gelagertem Erdgas und thermoelektrischen Maschinen
Energy system involving natural gas stored in liquid form and thermoelectric engines

(30) Priorité: 25.10.2004 FR 0411328
(43) Date de publication de la demande: 26.04.2006
(73) Titulaire: SNECMA, 75015 Paris (FR); Alstom Power Conversion, 91300 Massy (FR)
(72) Inventeur: Feger, Damien, 27200 Vernon (FR); Julliand, Lionel, 90000 Belfort (FR); Mirzaian Dehkordi, Abdallah, 90300 Valdoie (FR)
(74) Mandataire: Joly, Jean-Jacques

(56) Documents cités:
- PATENT ABSTRACTS OF JAPAN vol. 007, no. 009 (M-185), 14 janvier 1983 (1983-01-14) & JP 57 167597 A (HITACHI ZOSEN KK), 15 octobre 1982 (1982-10-15)

## Description

### Domaine de l'invention

La présente invention se rapporte au domaine général d'alimentation énergétique des machines thermoélectriques comprenant des machines tournantes électriques et elle concerne plus particulièrement un système énergétique assurant le refroidissement des machines tournantes électriques d'un navire ou d'un système de production d'électricité.

### Arrière-plan de l'invention

Il est connu des navires à propulsion électrique utilisant du gaz naturel stocké sous forme liquide comme combustible, en particulier des navires méthaniers.

Un tel navire est connu du document JP 57167597, qui est considéré comme étant l'état de la technique le plus proche, et qui montre les caractéristiques du préamble de la revendication indépendante.

En effet, dans ce type de navire le gaz naturel est transporté sous forme liquide, à la pression atmosphérique, à une température de l'ordre de -160°C. Bien que les cuves contenant la cargaison soient isolées, une partie de la cargaison s'évapore en permanence, typiquement de 0,1% à 0,3 % par jour, du fait des entrées thermiques traversant cette isolation.

Lorsque le navire fait route, les vapeurs du gaz naturel correspondantes sont avantageusement utilisées comme combustible pour assurer une partie de sa propulsion. Jusqu'à une période récente, ces navires méthaniers étaient à propulsion à vapeur. La chaudière qui fournit cette vapeur étant équipée à la fois de brûleurs fonctionnant au gaz et de brûleurs fonctionnant au fuel lourd. Suivant les besoins énergétiques du navire et le débit des vapeurs de gaz naturel s'échappant de la cargaison, la production de vapeur était ajustable en complétant la puissance fournie par les vapeurs de gaz naturel avec celle des brûleurs à fuel lourd.

Ce type de propulsion mixte avait de plus l'avantage, lorsque les besoins énergétiques du navire étaient inférieurs à la puissance fournie par la chaudière, de pouvoir évacuer l'excédent des vapeurs, directement vers un condenseur plutôt que vers le système de propulsion du navire, comme c'est le cas dans les phases d'attente ou de marche à allure réduite.

Ce type de propulsion présente néanmoins de nombreux inconvénients, notamment :
- un rendement plus faible que des systèmes à propulsion diesel, turbine à gaz ou même diesel à fuel lourd ;
- un encombrement important de salle de machine, limitant à volume égal de coque de navire, le volume disponible pour la cargaison ; et
- une technologie de propulsion peu répandue, pouvant entraîner des difficultés de maintenance et de formation des équipages.

Ce type de propulsion est donc concurrencé actuellement par des solutions basées sur l'utilisation de moteurs diesels ou de turbines à gaz, couplés à des dispositifs permettant de brûler ou de reliquéfier les vapeurs de gaz naturel s'échappant de la cargaison si les besoins énergétiques du navire ne permettent pas de les absorber. Dans les deux cas, ces moteurs ou turbines peuvent utiliser soit du gaz naturel soit du fuel comme combustible pour entraîner des générateurs électriques qui alimentent entre autre un ou plusieurs moteurs de propulsion.

Dans le cas où les vapeurs de gaz naturel disponibles ne peuvent seules subvenir aux besoins énergétiques du navire, leur apport est complété non par du fuel mais par du gaz naturel liquéfié qui est directement pompé dans les cuves ou réservoirs à l'état liquide puis vaporisé.

Dans les deux cas, les vapeurs de gaz naturel ou le gaz naturel liquéfié prélevé dans les cuves sont à des températures trop froides (respectivement de l'ordre de -130°C et -160°C) et à une pression trop faible pour être directement utilisables par le système propulsif du navire. Il est donc nécessaire de les réchauffer à une température proche de l'ambiante et de les comprimer à une pression de quelques atmosphères avant de les utiliser.

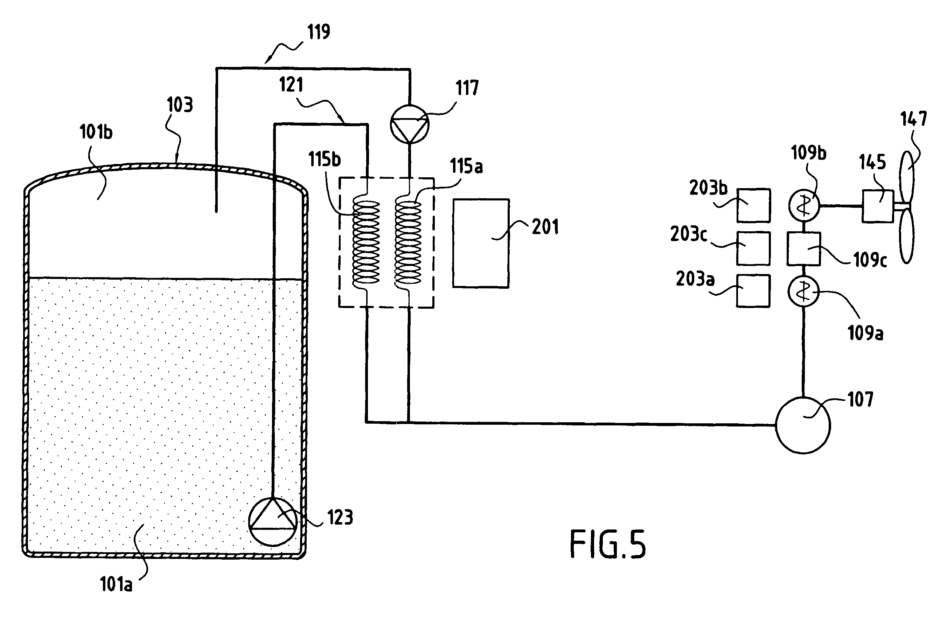

En effet, la figure 5 montre très schématiquement un système de propulsion électrique d'un navire méthanier selon l'art antérieur.

Ce système comporte un premier circuit de prélèvement 119 des vapeurs de gaz naturel 101b s'échappant des réservoirs ou cuves 103. Ces vapeurs de gaz naturel 101b sont dirigées vers un ou plusieurs compresseurs 117 puis vers un échangeur de réchauffement 115a qui les amène à une pression et une température compatibles avec le ou les moteurs thermiques 107 du système propulsif du navire.

Afin d'assurer un complément d'énergie éventuellement nécessaire pour couvrir les besoins du navire, le système comporte un second circuit de prélèvement 121 du gaz naturel liquéfié 101a comprenant une ou plusieurs pompes immergées 123 dans l'une ou plusieurs cuves de gaz naturel liquéfié 101a et d'un autre échangeur de réchauffement 115b amenant ce gaz liquéfié 101a à une température et une pression compatibles avec les moteurs thermiques 107.

Les échangeurs de réchauffement 115a et 115b sont alimentés par une source de chaleur 201 (vapeur ou électrique) permettant ainsi de réchauffer les vapeurs de gaz naturel 101b et le gaz naturel liquéfié 101a.

Le système de propulsion du navire comporte un ou plusieurs moteurs électriques 109b alimentés par des électroniques de puissance 109c et actionnant directement ou via un coupleur ou un réducteur 145 une ou plusieurs hélices 147.

En outre, le refroidissement des moteurs 109b, alternateurs 109a ou électroniques de puissance 109c est assuré par des systèmes de refroidissement 203b, 203a, et 203c par air ou par eau.

Cependant, le rendement énergétique de ce système de propulsion électrique n'est pas très élevé.

### Objet et résumé de l'invention

La présente invention se propose donc d'améliorer le rendement d'un système énergétique comportant des machines thermoélectriques et mettant en oeuvre du gaz naturel stocké sous forme liquide.

Un autre but est de réduire l'encombrement du système tout en améliorant la fiabilité et la sécurité.

Encore un autre but est de faciliter la maintenance et réduire les coûts.

Ces buts sont atteints grâce à un système énergétique mettant en oeuvre du gaz naturel stocké sous forme liquide dans au moins un réservoir de gaz naturel liquéfié, le système comportant un dispositif d'alimentation muni d'un dispositif de réchauffement du gaz naturel liquéfié et/ou des vapeurs de gaz naturel et mettant en oeuvre des machines thermoélectriques comprenant des machines tournantes électriques, le système comporte en outre un premier système échangeur de chaleur associé à un dispositif de refroidissement des machines tournantes électriques et un second système échangeur de chaleur associé au dispositif de réchauffement, le premier système échangeur de chaleur étant couplé au second système échangeur de chaleur afin de permettre le transfert d'énergie thermique depuis le dispositif de refroidissement vers le dispositif de réchauffement.

Ainsi, le fait de prendre une partie des frigories disponibles dans les vapeurs de gaz naturel s'échappant du ou des réservoirs et dans le gaz naturel liquéfié prélevé dans ce ou ces réservoirs pour abaisser de manière très significative la température de fonctionnement du ou des moteurs électriques de propulsion et des autres composants électrotechniques permet d'améliorer le rendement et de réduire, entre autres le coût et l'encombrement.

De plus cette invention permet d'améliorer sensiblement le bilan énergétique du système en utilisant les pertes des composants des machines tournantes électriques pour re-gazéifier ou réchauffer le gaz naturel.

Avantageusement, chacun des premier et second systèmes échangeurs de chaleur comporte une pluralité d'échangeurs de chaleur.

Le couplage entre le premier système échangeur de chaleur et le second système échangeur de chaleur est formé par au moins un circuit de transfert thermique comprenant un fluide frigorifique diphasique.

De préférence, le premier système échangeur de chaleur est un système évaporateur et le second système échangeur de chaleur est un système condenseur de sorte que le fluide frigorifique présente une phase gazeuse dans le premier système échangeur de chaleur et une phase liquide dans le second système échangeur de chaleur assurant ainsi la circulation du fluide frigorifique dans ledit au moins un circuit de transfert thermique par un simple effet de gravité.

Le fluide frigorifique peut comprendre un fluide choisi parmi l'argon, l'azote, ou tout autre fluide condensable par des vapeurs de gaz naturel liquéfié, utilisé pur ou sous forme de mélange.

Selon une particularité de l'invention, ledit au moins un circuit de transfert thermique comporte au moins un organe de régulation de débit.

Selon une autre particularité de l'invention, ledit au moins un circuit de transfert thermique comporte au moins un échangeur de chaleur supplémentaire associé à une source de chaleur auxiliaire.

Selon un aspect de l'invention, le dispositif d'alimentation comporte un premier circuit de prélèvement des vapeurs de gaz naturel s'échappant dudit au moins un réservoir de gaz naturel liquéfié, ledit premier circuit de prélèvement comprenant au moins un compresseur et au moins un premier échangeur de chaleur-réchauffeur associé au second système échangeur de chaleur.

Selon un autre aspect de l'invention, le dispositif d'alimentation comporte en outre un second circuit de prélèvement de gaz naturel liquéfié comprenant au moins une pompe immergée dans ledit au moins un réservoir de gaz naturel liquéfié et au moins un second échangeur de chaleur-réchauffeur associé au second système échangeur de chaleur.

Selon encore une autre particularité de l'invention, le dispositif de refroidissement comporte une centrale de climatisation.

L'invention vise en particulier un navire comportant un système énergétique selon les caractéristiques ci-dessus, et où le gaz naturel est utilisé comme combustible pour les machines thermoélectriques qui sont destinées à propulser le navire.

Avantageusement, le dispositif d'alimentation est installé dans un local de cargaison sur le pont du navire à une distance de sécurité déterminée du château du navire et les machines thermoélectriques sont installées dans une salle des machines.

En particulier le navire est un navire méthanier transportant ou utilisant comme combustible le gaz naturel liquéfié.

L'invention vise aussi un système de production d'électricité comportant un système énergétique selon les caractéristiques ci-dessus, et où les machines tournantes électriques comportent essentiellement des alternateurs destinés à produire de l'électricité.

Elle peut en particulier s'adresser à un terminal de regazéification de gaz naturel liquéfié où les frigories mises à disposition lors du processus de re-gazéification du gaz naturel liquéfié peuvent être utilisées pour le refroidissement des alternateurs ou générateurs électriques alimentant en électricité le terminal.

### Brève description des dessins

D'autres particularités et avantages du procédé et du dispositif selon l'invention ressortiront à la lecture de la description faite ci-après, à titre indicatif mais non limitatif, en référence aux dessins annexés sur lesquels :
- la figure 1 est une vue très schématique d'un système énergétique mettant en oeuvre du gaz naturel stocké sous forme liquide et comportant un premier système échangeur de chaleur associé à un dispositif de refroidissement et un second système échangeur de chaleur associé à un dispositif de réchauffement conforme à l'invention ;
- la figure 2 est une variante de la figure 1 montrant que le premier système échangeur de chaleur est disposé à un niveau plus bas que le second système échangeur de chaleur ;
- la figure 3 illustre très schématiquement un terminal de regazéification alimentant un gazoduc comportant un système énergétique selon i'invention ;
- la figure 4 est une vue très schématique d'un navire méthanier à propulsion électrique comportant un système échangeur de chaleur selon la figure 2 ; et
- la figure 5 est une vue très schématique d'un système énergétique d'un navire selon l'art antérieur.

### Description détaillée de modes de réalisation

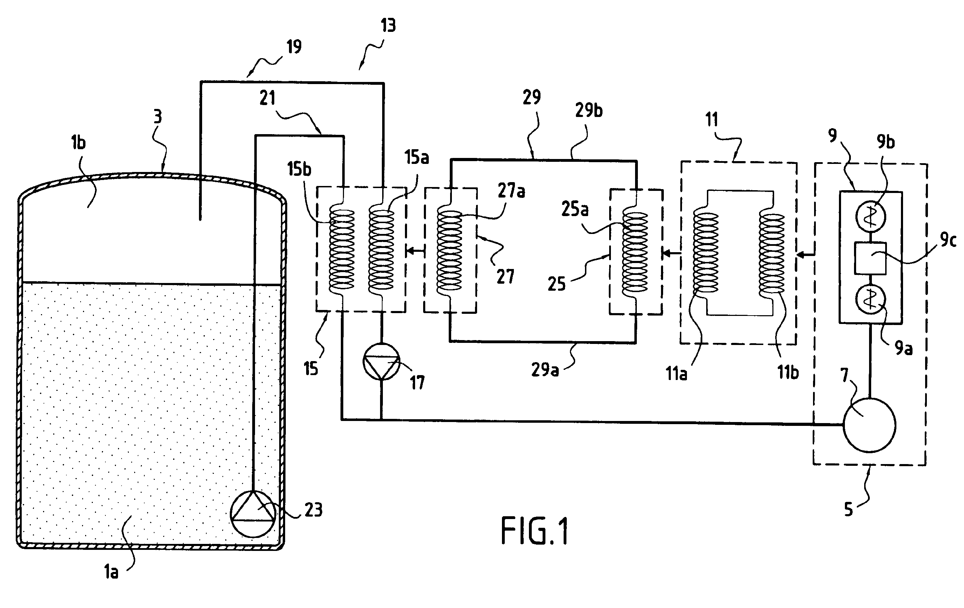

La figure 1 illustre très schématiquement un système énergétique mettant en oeuvre du gaz naturel 1a, 1b stocké sous forme liquide dans un ou plusieurs réservoirs 3 (un seul réservoir est représenté) ainsi que des machines thermoélectriques 5 comprenant des moteurs thermiques 7 et des machines tournantes électriques 9.

Les machines tournantes électriques 9 peuvent comprendre des alternateurs 9a et des moteurs électriques 9b alimentés par des électroniques de puissance 9c.

Ces machines tournantes électriques 9 sont refroidies par un dispositif de refroidissement 11 qui peut comporter, de manière classique, un circuit muni des échangeurs de chaleur 11a et 11b. Le dispositif de refroidissement 11 assure alors le bon fonctionnement des alternateurs 9a, moteurs électriques 9b et électroniques de puissance 9c.

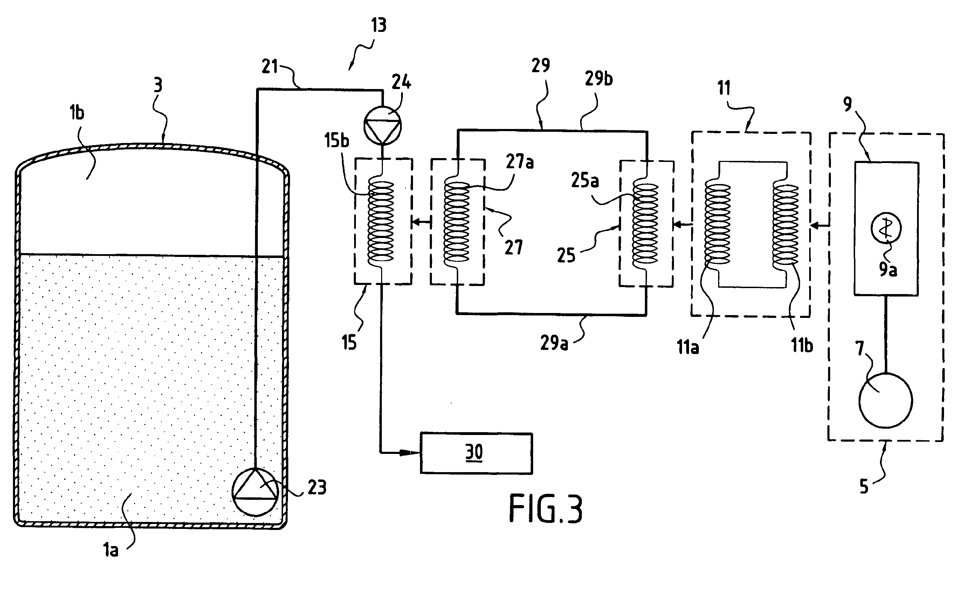

En outre, le système énergétique comporte un dispositif d'alimentation 13 pour prélever et traiter du gaz naturel liquéfié 1a et/ou des vapeurs de gaz naturel 1b pour alimenter les moteurs thermiques 7 des machines thermoélectriques 5 (figure 1) ou éventuellement pour alimenter un gazoduc (voir figure 3).

En effet, le dispositif d'alimentation 13 est muni d'un dispositif de réchauffement 15 ayant un ou plusieurs échangeurs de chaleur 15a, 15b pour réchauffer le gaz naturel liquéfié 1a et/ou les vapeurs de gaz naturel 1b à une température proche de l'ambiante et éventuellement un ou plusieurs compresseurs 17 pour comprimer les vapeurs de gaz naturel 1b.

Le dispositif d'alimentation 13 comporte alors un premier circuit de prélèvement 19 des vapeurs de gaz naturel 1b s'échappant des ou du réservoir 3 de gaz naturel liquéfié 1a. Ce premier circuit de prélèvement 19 comprend au moins un compresseur 17 et un premier échangeur de chaleur-réchauffeur 15a.

Par ailleurs, afin d'assurer un complément d'énergie, éventuellement nécessaire, pour couvrir les besoins des machines thermoélectriques 5, le dispositif d'alimentation 13 peut comporter un second circuit de prélèvement 21 de gaz naturel liquéfié 1a. Ce second circuit de prélèvement 21 comprend au moins une pompe 23 immergée dans le réservoir 3 de gaz naturel liquéfié 1a et un second échangeur de chaleur-réchauffeur 15b.

En outre, conformément à l'invention, le système énergétique comporte un premier système échangeur de chaleur 25 associé au dispositif de refroidissement 11 des machines tournantes électriques 9 et un second système échangeur de chaleur 27 associé au dispositif de réchauffement 15 du gaz naturel liquéfié 1a et/ou des vapeurs de gaz naturel 1b alimentant les machines thermoélectriques 5.

Le premier système échangeur de chaleur 25 peut comporter un ou plusieurs échangeurs de chaleur 25a. De même, le second système échangeur de chaleur 27 peut comporter un ou plusieurs échangeurs de chaleur 27a. On notera que dans un souci de simplification, le dessin ne montre qu'un seul échangeur de chaleur 25a, 27a dans chacun des premier et second systèmes échangeurs de chaleur 25, 27.

Le premier système échangeur de chaleur 25 est couplé au second système échangeur de chaleur 27 afin de permettre le transfert d'énergie thermique (représenté sur les dessins par des flèches) depuis le dispositif de refroidissement 11 vers le dispositif de réchauffement 15. Ainsi, une partie des frigories disponibles dans les vapeurs du gaz naturel 1b s'échappant du réservoir 3 et dans le gaz naturel liquéfié 1a prélevé dans ce réservoir 3 est utilisée pour abaisser la température de fonctionnement des machines tournantes électriques 9 ou pour permettre un refroidissement plus efficace de ces machines.

Le couplage entre le premier système échangeur de chaleur 25 et le second système échangeur de chaleur 27 est réalisé par des conduits 29a, 29b formant au moins un circuit de transfert thermique (ou de frigories) 29 comprenant un fluide frigorifique.

En effet, le circuit de transfert thermique 29 forme une boucle permettant de transférer des frigories fournies par les vapeurs froides de gaz naturel 1b amenées par le premier circuit de prélèvement 19 dans le premier échangeur de chaleur-réchauffeur 15a et par celles fournies par le gaz naturel liquéfié 1a prélevé dans le réservoir 3 par le second circuit de prélèvement 21 via le second échangeur de chaleur-réchauffeur 15b.

Cette boucle ou circuit de transfert thermique 29 contient un fluide frigorifique dont la composition peut être optimisée en fonction de la performance thermique requise, en particulier en fonction des températures de fonctionnement des premier et second systèmes échangeurs de chaleur 25, 27.

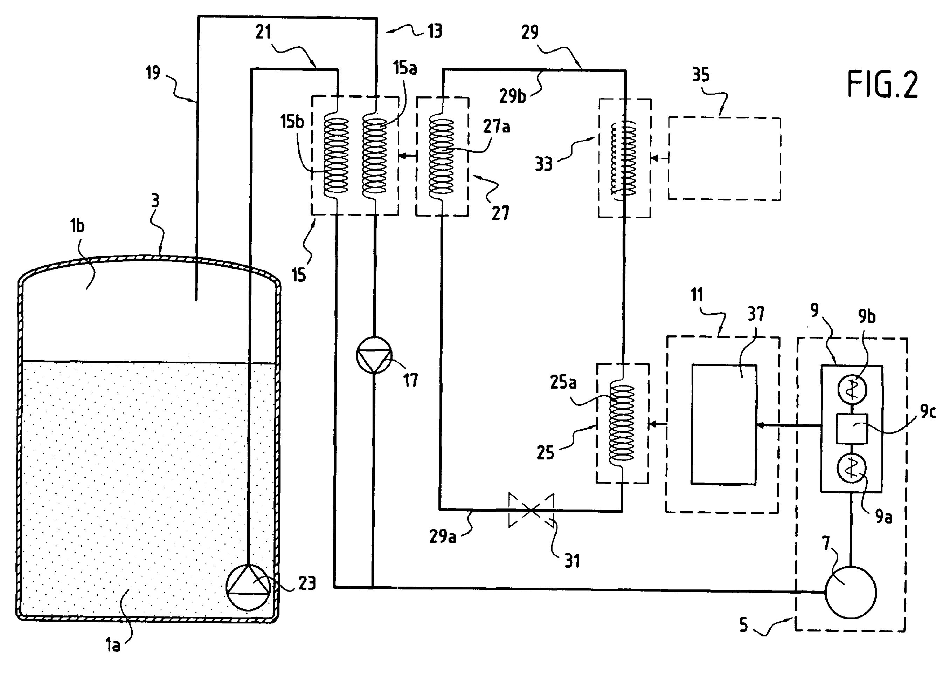

En effet, la figure 2, illustre très schématiquement un système énergétique qui se distingue de la figure 1 essentiellement par le fait que le premier système échangeur de chaleur 25 est disposé à un niveau plus bas que celui du second système échangeur de chaleur 27. Ceci, assure une circulation gravitationnelle du fluide frigorifique, grâce à une différence de densité entre le fluide frigorifique circulant dans le premier système échangeur de chaleur 25 et celui circulant dans le second système échangeur de chaleur 27, le premier système 25 étant relativement plus chaud que le second système 27.

Avantageusement, le fluide frigorifique est un fluide diphasique, par exemple de l'argon, de l'azote, ou tout autre fluide frigorigène condensable par des vapeurs de gaz naturel liquéfié (par exemple un hydrocarbure), utilisé pur ou sous forme de mélange. En effet, un changement de phase de ce fluide frigorifique dans l'un ou l'autre des premier et second systèmes échangeurs de chaleur 25, 27, permet d'améliorer la performance de ce circuit de transfert thermique 29 et de réduire la taille et le coût des éléments qui le composent.

En particulier, le premier système échangeur de chaleur 25 peut être un système évaporateur et le second système échangeur de chaleur 27 peut être un système condenseur pour le fluide frigorifique. Ainsi, ce fluide frigorifique présente une phase gazeuse dans le premier système échangeur de chaleur 25 et une phase liquide dans le second système échangeur de chaleur 27 facilitant encore davantage sa circulation, dans le circuit de transfert thermique 29, par le simple effet de gravité.

On notera que le circuit de transfert thermique 29 peut éventuellement comporter un ou plusieurs organes de régulation de débit 31 (un seul organe est représenté en traits pointillés) du fluide frigorifique afin d'adapter la puissance froide du premier système échangeur de chaleur 25 aux besoins des machines tournantes électriques 9.

En outre, le circuit de transfert thermique 29 peut éventuellement comporter au moins un échangeur de chaleur supplémentaire 33 (représenté en traits pointillés) associé à une source de chaleur auxiliaire 35 (représentée en traits pointillés) qui peut être, par exemple, un circuit d'eau, des réchauffeurs électriques ou une source de vapeur.

L'implantation de l'échangeur de chaleur supplémentaire 33 sur le circuit de transfert thermique 29 permet d'assurer la vaporisation et le réchauffage des vapeurs de gaz naturel 1b et du gaz naturel liquéfié passant dans les premier et second échangeurs de chaleur-réchauffeur 15a, 15b même lorsque la chaleur collectée par le premier système échangeur de chaleur 25 au niveau du dispositif de refroidissement 11 des machines tournantes électriques 9 est insuffisante pour le faire.

Par ailleurs, le dispositif de refroidissement 11 peut comporter une centrale de climatisation 37. En effet, afin d'améliorer entre autre, la souplesse de régulation de la température des machines tournantes électriques 9, les frigories mises à disposition via le premier système échangeur de chaleur 25 peuvent ne pas être directement utilisées par ces machines mais par l'intermédiaire de la centrale de climatisation 37.

Le système énergétique peut ainsi s'appliquer à un système de production d'électricité, en particulier dans des terminaux gaziers « off shore » utilisant du gaz naturel liquéfié 1a ou des vapeurs de gaz naturel 1b pour satisfaire leur besoin énergétique. Dans ce cas, les machines tournantes électriques 9 comportent principalement des générateurs ou alternateurs 9a destinés à produire de l'électricité.

En effet, la figure 3 illustre très schématiquement un terminal de regazéification comportant un système énergétique selon l'invention et utilisant du gaz naturel stocké sous forme liquide 1a dans un ou plusieurs réservoirs 3 pour alimenter un gazoduc 30. On notera que les éléments de cette figure qui sont identiques à ceux des figures 1 et 2 portent les mêmes références.

Suivant les besoins d'alimentation du gazoduc 30 alimenté en gaz à haute pression, le gaz liquéfié 1a contenu dans le réservoir 3 est transféré, par la pompe 23 immergée dans ce réservoir 3, vers une pompe 24 haute pression débitant ce gaz liquéfié 1a vers le dispositif de réchauffement 15 (correspondant ici à un dispositif de regazéification) afin qu'il soit re-gazéifié avant de l'envoyer, à une température sensiblement ambiante, vers le gazoduc 30.

De manière identique et conformément à l'invention, le premier système échangeur de chaleur 25 est couplé au second système échangeur de chaleur 27 afin de permettre le transfert d'énergie thermique depuis le dispositif de refroidissement 11 vers le dispositif de réchauffement 15.

Ainsi, les frigories sont prélevées sur le dispositif de réchauffement 15 assurant la regazéification du gaz naturel liquide 1a stocké dans le réservoir 3 pour refroidir les machines tournantes électriques 9 par l'intermédiaire des premier et second échangeurs de chaleur 25 et 27.

On notera que les moteurs thermiques 7 des machines thermoélectriques 5 du terminal sont éventuellement alimentés par le gaz naturel liquéfié 1a et/ou des vapeurs de gaz naturel 1b stockés dans le réservoir 3 selon un circuit non représenté sur le dessin par souci de simplification.

Le système énergétique peut aussi s'appliquer aux navires utilisant du gaz naturel stocké sous forme liquéfiée comme combustible. En particulier, ce système peut être appliqué aux navires méthaniers qui transportent du gaz naturel liquéfié.

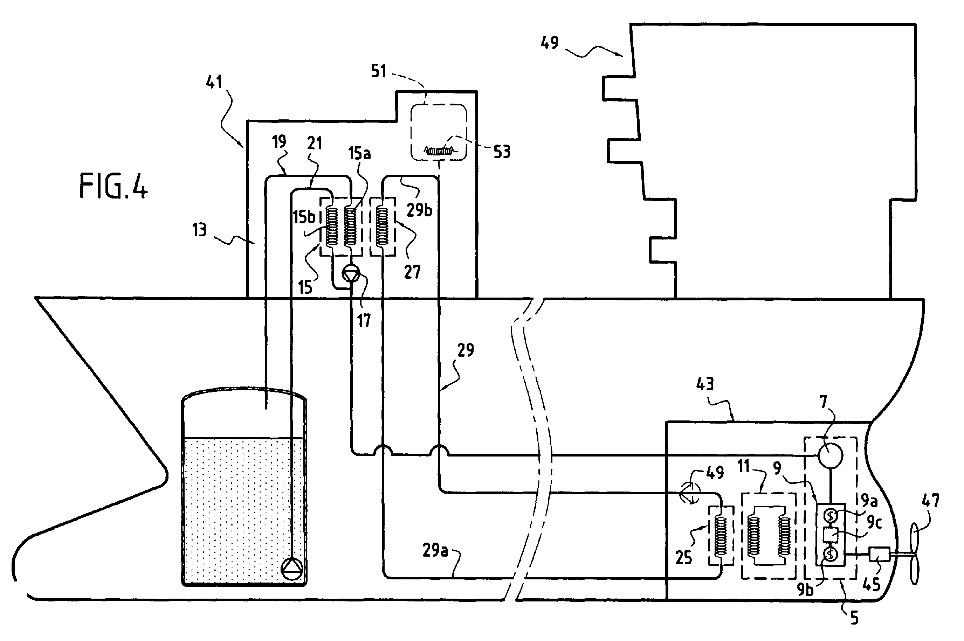

En effet, la figure 4 est une vue très schématique d'un navire méthanier à propulsion électrique utilisant du gaz naturel comme combustible stocké sous forme liquide.

Le navire méthanier comporte un système énergétique comme celui de la figure 2 dont seulement quelques éléments sont montrés dans un souci de simplification du dessin. Cependant, l'architecture de ce système énergétique doit prendre en compte les contraintes de son implantation à bord du navire méthanier.

En effet, les différents équipements du système énergétique se trouvent dans deux endroits distincts du navire, pour des raisons, essentiellement, de sécurité.

Le dispositif d'alimentation 13 est installé dans le local cargaison 41 du navire. En revanche, les machines thermoélectriques 5 propulsant le navire sont installées dans le local de la salle des machines 43.

Ainsi, le local cargaison 41 contient la plupart des auxiliaires nécessaires au contrôle de la cargaison et à son utilisation comme combustible par le système propulsif du navire, en particulier au contrôle de la pression dans les cuves ou réservoirs 3, au réchauffage par le dispositif de réchauffement 15 et la mise en pression par le compresseur 17 des vapeurs de gaz naturel 1b qui s'en dégagent, prélevées par le premier circuit de prélèvement 19, à la vaporisation et au réchauffage par le dispositif de réchauffement 15 du gaz naturel liquéfié 1a de complément de combustible amené par le second circuit de prélèvement 21.

Par ailleurs, le local de la salle des machines 43 contient, entre autres, les moteurs thermiques 7, les alternateurs 9a, les électroniques de puissances 9c ainsi que les moteurs électriques 9a de propulsion actionnant directement ou via un coupleur ou un réducteur 45 une ou plusieurs hélices 47.

Les normes de sécurité imposent de placer le local cargaison 41, considéré comme dangereux, sur le pont du navire et à une distance de sécurité déterminée du château 49 du navire, et de réduire au maximum le nombre d'équipements dangereux dans la salle des machines 43 qui est moins facile à ventiler car se trouvant au moins en partie sous la flottaison.

De ce fait, pour un navire méthanier, la distance et la différence de niveau que doit combler le circuit de transfert thermique 29 entre le local cargaison 41 et les machines tournantes électriques 9 placés dans la salle des machines 43 sont importantes. A titre d'exemple, la distance entre le local cargaison 41 et la salle des machines 43 située sous le château 49 du navire est de l'ordre de 100 m et la différence de niveau entre le local cargaison 41 et la salle des machines 43 est de l'ordre de 30 m.

Par conséquent, les pertes de charges dans les conduits 29a et 29b du circuit de transfert thermique 29 peuvent être importantes. Ceci peut justifier la disposition d'une pompe 49 (représentée en traits pointillés) dans le circuit de transfert thermique 29 pour équilibrer les pertes de charges dans ce circuit.

Cependant, la différence de niveau entre le local cargaison 41 et la salle des machines 43 peut être mise à profit pour assurer la circulation du fluide frigorifique par un simple effet gravitaire, en tirant partie de la différence de densité du fluide entre la conduite froide 29a et la conduite chaude 29b et ce d'autant plus si le choix de ce fluide permet de faire fonctionner le second système échangeur de chaleur 27 comme un condenseur et le premier système échangeur de chaleur 25 comme un évaporateur. La conduite froide 29a est alors remplie de liquide, alors que la conduite chaude 29b est remplie de gaz.

Ceci est le cas si, par exemple, on choisit comme fluide frigorifique de l'argon sous une pression d'environ 2 MPa, sachant que la température de liquéfaction de l'argon à cette pression est de -140°C.

En effet, en contact, via le premier échangeur de chaleur-réchauffeur 15a, avec les vapeurs froides de gaz naturel 1b dont la température est de l'ordre de -30°C, et via le second échangeur de chaleur-réchauffeur 15b avec le gaz naturel liquéfié la dont la température est de -160°C, l'argon peut ainsi être refroidi, puis liquéfié dans le second système échangeur de chaleur 27.

Dans ce cas, la pression hydrostatique de la colonne de liquide en bas de la conduite froide 29a est alors de l'ordre de 0,3 Mpa. A titre d'exemple, lorsque la température de l'argon à la sortie du premier système échangeur de chaleur 25 est de l'ordre de 0°C, et que la conduite chaude 29b est remplie de gaz, la pression hydrostatique correspondante sera de l'ordre de 0,03 Mpa. Cet écart de pression entre les deux branches du circuit de transfert thermique 29 peut donc être utilisé pour équilibrer les pertes de charges dans ce circuit thermique 29 sans avoir recours à la pompe 49, augmentant ainsi la fiabilité et réduisant les coûts du système énergétique.

En effet, pour un débit d'argon de l'ordre de 3 kg/s permettant un transfert de frigories de l'ordre de 600 kw entre la salle des machines 43 et le local cargaison 41, les pertes de charges seront équilibrées par la différence de pression hydrostatique entre la conduite chaude 29b et la conduite froide 29a pour des diamètres respectifs de ces conduites 29a, 29b de l'ordre de 20 cm et 5 cm respectivement.

Ainsi, même si ces conduites (en particulier la conduite froide 29b) doivent être isolées par une épaisseur de quelques cm de mousse isolante, leur implantation à bord du navire entre le local cargaison 41 et la salle des machines 43 ne pose pas de problème particulier.

Au cas où la pression moyenne dans le circuit de transfert thermique 29 en fonctionnement normal est de l'ordre de 2 Mpa, ce circuit 29 doit être dimensionné pour des pressions plus élevées (de l'ordre 5 Mpa) lorsque par exemple le navire est sans gaz et que l'ensemble du circuit 29 est à une température proche de l'ambiante.

Une autre solution consiste à disposer dans le circuit de transfert thermique 29, par exemple au niveau du local cargaison 41, un réservoir tampon 51 (traits en pointillés) permettant de limiter ce type de montée en pression. Afin d'en réduire sa taille, ce réservoir tampon 51 peut être éventuellement isolé et maintenu à une température inférieure à l'ambiante voire une température cryogénique par un échangeur-évaporateur 53 alimenté par du gaz naturel liquéfié 1a, permettant ainsi de stocker l'argon sous forme liquide.

Le choix du fluide frigoporteur ne se limite pas à l'argon et on peut envisager d'autres fluides, voire des mélanges de fluides, pour améliorer la capacité de transfert thermique du circuit de transfert thermique 29 ou en réduire la pression de fonctionnement.

Outre les navires méthaniers, cette invention peut s'appliquer, d'une manière plus générale, à tous les navires utilisant du gaz naturel comme combustible, stocké sous forme liquide. On peut noter dans ce cas, que le ou les réservoirs du gaz naturel liquéfié étant très petits par rapport à ceux d'un méthanier, les entrées thermiques dans le gaz naturel liquéfié sont très limitées et la majeure partie du combustible nécessaire est prélevée sous forme liquide. Pour une même puissance du moteur de propulsion les frigories disponibles sont donc très nettement supérieures, typiquement deux à trois fois plus, permettant un fonctionnement des machines tournantes électriques à des températures encore inférieures. Dans ce cas, il n'est pas nécessaire de collecter les frigories provenant des vapeurs des réservoirs et par conséquent on peut éventuellement supprimer le premier circuit de prélèvement.

Ainsi, le système énergétique, selon l'invention, appliqué à un système de production d'électricité ou à un navire, forme une synergie thermique entre le réchauffement des vapeurs du gaz naturel 1b et/ou du gaz naturel liquéfié 1a et le refroidissement des machines tournantes électriques 9.

En effet, les frigories apportées par les vapeurs du gaz naturel 1b et/ou le gaz naturel liquéfié 1a, correspondent à un média de refroidissement plus froid que l'eau ou l'air qui sont habituellement utilisés pour des machines fermées ou ouvertes respectivement.

Ainsi, en déplaçant le point de fonctionnement des machines tournantes électriques 9 vers des températures plus basses, elles généreront moins de pertes par effet Joule. Par conséquent le rendement de ces machines augmente permettant de réduire la consommation en énergie des moteurs thermiques 7 et de réduire les émissions des particules polluantes.

Il est aussi envisageable de continuer à faire opérer les machines tournantes électriques 9 à leurs températures de fonctionnement définies par les classes habituelles (BV, DNV, ABS, etc.) mais avec un refroidissement plus efficace. Dans ce cas, la puissance massique des machines tournantes électriques 9 augmente permettant de réduire leur encombrement.

## Revendications

1. Système énergétique mettant en oeuvre du gaz naturel comme combustible stocké sous forme liquide dans au moins un réservoir (3) de gaz naturel liquéfié, le système comportant un dispositif d'alimentation (13) muni d'un dispositif de réchauffement (15) du gaz naturel liquéfié (1a) et/ou des vapeurs de gaz naturel (1b) et mettant en oeuvre des machines thermoélectriques (5) comprenant des machines tournantes électriques (9), **caractérisé en ce qu'**il comporte un premier système échangeur de chaleur (25) associé à un dispositif de refroidissement (11) des machines tournantes électriques (9) et un second système échangeur de chaleur (27) associé au dispositif de réchauffement (15), le premier système échangeur de chaleur (25) étant couplé au second système échangeur de chaleur (27) afin de permettre le transfert d'énergie thermique depuis le dispositif de refroidissement (11) vers le dispositif de réchauffement (15).

2. Système selon la revendication 1, **caractérisé en ce que** chacun des premier et second systèmes échangeurs de chaleur (25, 27) comporte une pluralité d'échangeurs de chaleur (25a, 27a).

3. Système selon l'une quelconque des revendications 1 et 2, **caractérisé en ce que** le couplage entre le premier système échangeur de chaleur (25) et le second système échangeur de chaleur (27) est formé par au moins un circuit de transfert thermique (29) comprenant un fluide frigorifique diphasique.

4. Système selon la revendication 3, **caractérisé en ce que** le premier système échangeur de chaleur (25) est un système évaporateur et le second système échangeur de chaleur (27) est un système condenseur de sorte que le fluide frigorifique présente une phase gazeuse dans le premier système échangeur de chaleur (25) et une phase liquide dans le second système échangeur de chaleur (27) assurant ainsi la circulation du fluide frigorifique dans ledit au moins un circuit de transfert thermique (29) par un simple effet de gravité.

5. Système selon l'une quelconque des revendications 3 et 4, **caractérisé en ce que** le fluide frigorifique comprend un fluide choisi parmi l'argon, l'azote, ou tout autre fluide condensable par des vapeurs de gaz naturel liquéfié, utilisé pur ou sous forme de mélange.

6. Système selon l'une quelconque des revendications 3 à 5, **caractérisé en ce que** ledit au moins un circuit de transfert thermique (29) comporte au moins un organe de régulation de débit (31).

7. Système selon l'une quelconque des revendications 3 à 6, **caractérisé en ce que** ledit au moins un circuit de transfert thermique (29) comporte au moins un échangeur de chaleur supplémentaire (33) associé à une source de chaleur auxiliaire (35).

8. Système selon l'une quelconque des revendications 1 à 7, **caractérisé en ce que** le dispositif d'alimentation (13) comporte un premier circuit de prélèvement (19) des vapeurs de gaz naturel (1b) s'échappant dudit au moins un réservoir (3) de gaz naturel liquéfié (1a), ledit premier circuit de prélèvement (19) comprenant au moins un compresseur (17) et au moins un premier échangeur de chaleur-réchauffeur (15a) associé au second système échangeur de chaleur (27).

9. Système selon l'une quelconque des revendications 1 à 8, **caractérisé en ce que** le dispositif d'alimentation (13) comporte en outre un second circuit de prélèvement (21) de gaz naturel liquéfié comprenant au moins une pompe (23) immergée dans ledit au moins un réservoir (3) de gaz naturel liquéfié (1a) et au moins un second échangeur de chaleur-réchauffeur (15b) associé au second système échangeur de chaleur (27).

10. Système selon la revendication 1, **caractérisé en ce que** le dispositif de refroidissement (11) comporte une centrale de climatisation (37).

11. Navire comportant un système énergétique selon l'une quelconque des revendications 1 à 10, **caractérisé en ce que** le gaz naturel (1a, 1b) est utilisé comme combustible pour les machines thermoélectriques (5) qui sont destinées à propulser le navire.

12. Navire selon la revendication 11, **caractérisé en ce que** le dispositif d'alimentation (13) est installé dans un local de cargaison (41) sur le pont du navire à une distance de sécurité déterminée du château (49) du navire et **en ce que** les machines thermoélectriques (5) sont installées dans une salle de machines (43).

13. Navire selon l'une quelconque des revendications 11 et 12, **caractérisé en ce que** le navire est un navire méthanier transportant ou utilisant comme combustible le gaz naturel liquéfié (1a).

14. Système de production d'électricité comportant un système énergétique selon l'une quelconque des revendications 1 à 10, **caractérisé en ce que** les machines tournantes électriques (9) comportent des alternateurs (9a) destinés à produire de l'électricité.

15. Terminal de regazéification de gaz naturel liquéfié pour alimenter en gaz un gazoduc (30), **caractérisé en ce qu'**il comporte un système de production d'électricité selon la revendication 14.

## Claims

1. An energy system using as fuel natural gas stored in liquid form in at least one tank (3) containing liquefied natural gas, the system comprising a feeder device (13) provided with a heater device (15) for heating liquefied natural gas (1a) and/or natural gas vapor (1b), and making use of a thermoelectric power unit (5) including rotary electrical machines (9), the system being **characterized in that** it comprises a first heat exchanger system (25) associated with a cooler device (11) for cooling the rotary electrical machines (9), and a second heat exchanger system (27) associated with the heater device (15), the first heat exchanger system (25) being coupled to the second heat exchanger (27) in order to enable heat to be transferred from the cooler device (11) to the heater device (15).

2. A system according to claim 1, **characterized in that** each of the first and second heat exchanger systems (25, 27) comprises a plurality of heat exchangers (25a, 27a).

3. A system according to claim 1 or claim 2, **characterized in that** the coupling between the first heat exchanger system (25) and the second heat exchanger system (27) is constituted by at least one heat transfer circuit (29) containing a two-phase refrigerant.

4. A system according to claim 3, **characterized in that** the first heat exchanger system (25) is an evaporator system and the second heat exchanger system (27) is a condenser system, such that the refrigerant presents a gas phase in the first heat exchanger system (25) and a liquid phase in the second heat exchanger system (27), thus causing the refrigerant to circulate in said at least one heat transfer circuit (29), merely under the effect of gravity.

5. A system according to claim 3 or claim 4, **characterized in that** the refrigerant comprises a fluid selected from argon, nitrogen, or any other fluid that is condensable by liquefied natural gas vapor, the fluid being used pure or in the form of a mixture.

6. A system according to any one of claims 3 to 5, **characterized in that** said at least one heat transfer circuit (29) includes at least one flow rate regulator member (31).

7. A system according to any one of claims 3 to 6, **characterized in that** said at least one heat transfer circuit (29) includes at least one additional heat exchanger (33) associated with an auxiliary source (35) of heat.

8. A system according to any one of claims 1 to 7, **characterized in that** the feeder device (13) comprises a first circuit (19) for taking natural gas vapor (1b) that is given off by said at least one tank (3) of liquefied natural gas (1a), said first circuit (19) comprising at least one compressor (17) and at least one first heating heat exchanger (15a) associated with the second heat exchanger system (27).

9. A system according to any one of claims 1 to 8, **characterized in that** the feeder device (13) further comprises a second circuit (21) for taking liquefied natural gas, the second circuit comprising at least one pump (23) immersed in said at least one tank (3) of liquefied natural gas (1a), and at least one second heating heat exchanger (15b) associated with the second heat exchanger system (27).

10. A system according to claim 1, **characterized in that** the cooler device (11) includes an air-conditioning unit (37).

11. A ship including an energy system according to any one of claims 1 to 10, the ship being **characterized in that** natural gas (1a, 1b) is used as fuel for the thermoelectric power units (5) for propelling the ship.

12. A ship according to claim 11, **characterized in that** the feeder device (13) is installed in a cargo area (41) on the deck of the ship at a determined safety distance from the superstructure (49) of the ship, and **in that** the thermoelectric power units (5) are installed in a machine room (43).

13. A ship according to claim 11 or claim 12, **characterized in that** the ship is a methane tanker transporting liquefied natural gas (1a), and using it as fuel.

14. An electricity production system comprises an energy system according to any one of claims 1 to 10, **characterized in that** the rotary electrical machines (9) comprise alternators (9a) for producing electricity.

15. A terminal for regasifying liquefied natural gas to feed a gas pipeline (30) with gas, the terminal being **characterized in that** it includes an electricity production system according to claim 14.

## Patentansprüche

1. Energiesystem, das als Treibstoff Erdgas verwendet, welches in flüssiger Form in wenigstens einem Flüssigerdgasbehälter (3) gelagert ist, wobei das System eine Versorgungseinrichtung (13) umfaßt, welche mit einer Vorrichtung zum Erwärmen (15) des Flüssigerdgases (1a) und/oder der Erdgasdämpfe (1 b) ausgestattet ist, sowie thermoelektrische Maschinen (5) einsetzt, die elektrische umlaufende Maschinen (9) umfassen, **dadurch gekennzeichnet, daß** es folgendes umfaßt, nämlich ein erstes Wärmetauschersystem (25), das einer Vorrichtung (11) zum Kühlen der elektrischen umlaufenden Maschinen (9) zugeordnet ist, sowie ein zweites Wärmetauschersystem (27), das der Erwärmungsvorrichtung (15) zugeordnet ist, wobei das erste Wärmetauschersystem (25) mit dem zweiten Wärmetauschersystem (27) gekoppelt ist, um die Übertragung von Wärmeenergie von der Kühlvorrichtung (11) auf die Erwärmungsvorrichtung (15) zu ermöglichen.

2. System nach Anspruch 1, **dadurch gekennzeichnet, daß** das erste und das zweite Wärmetauschersystem (25, 27) jeweils eine Vielzahl von Wärmetauschern (25a, 27a) umfassen.

3. System nach einem der Ansprüche 1 und 2, **dadurch gekennzeichnet, daß** die Kopplung zwischen dem ersten Wärmetauschersystem (25) und dem zweiten Wärmetauschersystem (27) von wenigstens einem Wärmeübertragungskreis (29) mit einem Zweiphasen-Kühlmittel gebildet ist.

4. System nach Anspruch 3, **dadurch gekennzeichnet, daß** das erste Wärmetauschersystem (25) ein Verdampfersystem und das zweite Wärmetauschersystem (27) ein Kondensatorsystem ist, so daß das Kühlmittel eine Gasphase in dem ersten Wärmetauschersystem (25) und eine Flüssigphase in dem zweiten Wärmetauschersystem (27) aufweist, wodurch die Zirkulation des Kühlmittels in dem wenigstens einen Wärmeübertragungskreis (29) durch eine einfache Schwerkraftwirkung sichergestellt wird.

5. System nach einem der Ansprüche 3 und 4, **dadurch gekennzeichnet, daß** das Kühlmittel ein Fluid ausgewählt aus Argon, Stickstoff, oder jedwedes andere durch Flüssigerdgasdämpfe kondensierbare Fluid umfaßt, welches rein oder in Form eines Gemischs verwendet wird.

6. System nach einem der Ansprüche 3 bis 5, **dadurch gekennzeichnet, daß** der wenigstens eine Wärmeübertragungskreis (29) wenigstens ein Organ zur Durchflußregelung (31) aufweist.

7. System nach einem der Ansprüche 3 bis 6, **dadurch gekennzeichnet, daß** der wenigstens ein Wärmeübertragungskreis (29) wenigstens einen zusätzlichen Wärmetauscher (33) umfaßt, der einer Hilfswärmequelle (35) zugeordnet ist.

8. System nach einem der Ansprüche 1 bis 7, **dadurch gekennzeichnet, daß** die Versorgungseinrichtung (13) einen ersten Kreis (19) zur Entnahme der aus dem wenigstens einen Behälter (3) für Flüssigerdgas (1a) entweichenden Erdgasdämpfe (1 b) umfaßt, wobei der erste Entnahmekreis (19) wenigstens einen Verdichter (17) und wenigstens einen ersten Wärmetauscher-Erhitzer (15a) umfaßt, welcher dem zweiten Wärmetauschersystem (27) zugeordnet ist.

9. System nach einem der Ansprüche 1 bis 8, **dadurch gekennzeichnet, daß** die Versorgungseinrichtung (13) ferner einen zweiten Kreis (21) zur Entnahme von Flüssigerdgas umfaßt, der wenigstens eine in den wenigstens einen Behälter (3) für Flüssigerdgas (1a) eingetauchte Pumpe (23) sowie wenigstens einen zweiten Wärmetauscher-Erhitzer (15b) aufweist, welcher dem zweiten Wärmetauschersystem (27) zugeordnet ist.

10. System nach Anspruch 1, **dadurch gekennzeichnet, daß** die Kühlvorrichtung (11) eine Klimaanlage (37) umfaßt.

11. Schiff mit einem Energiesystem nach einem der Ansprüche 1 bis 10, **dadurch gekennzeichnet, daß** das Erdgas (1a, 1b) als Treibstoff für die thermoelektrischen Maschinen (5) verwendet wird, die dazu bestimmt sind, das Schiff anzutreiben.

12. Schiff nach Anspruch 11, **dadurch gekennzeichnet, daß** die Versorgungseinrichtung (13) in einem Laderaum (41) auf Deck des Schiffes, in einem bestimmten Sicherheitsabstand von der Brücke (49) des Schiffes angebracht ist, und daß die thermoelektrischen Maschinen (5) in einem Maschinenraum (43) des Schiffes angebracht sind.

13. Schiff nach einem der Ansprüche 11 und 12, **dadurch gekennzeichnet, daß** das Schiff ein Flüssiggastanker ist, der Flüssigerdgas transportiert oder als Treibstoff verwendet.

14. Stromerzeugungssystem, das ein Energiesystem nach einem der Ansprüche 1 bis 10 umfaßt, **dadurch gekennzeichnet, daß** die elektrischen umlaufenden Maschinen (9) zur Stromerzeugung bestimmte Wechselstromgeneratoren (9a) umfassen.

15. Anlage zur Regasifizierung von Flüssigerdgas, um eine Gaspipeline (30) mit Gas zu versorgen, **dadurch gekennzeichnet, daß** sie ein Stromerzeugungssystem nach Anspruch 14 umfaßt.
